# EUROPEAN PATENT APPLICATION

(11) **EP 4 757 097 A1**
(43) Date of publication of application: **10.06.2026**
(21) Application number: 24217289.8
(22) Date of filing: 03.12.2024
(51) Int. Cl.: H02J 3/01

(54) **POWER COUPLING**

(71) Applicant: Lopi Elektronika Sp. z o.o., 92-104 Lodz (PL)
(72) Inventor: OSTROWSKI, Bartosz, 90-437 Lódz (PL); ANUSZKIEWICZ, Andrzej, 05-126 Katy Wegierskie (PL)
(74) Representative: AOMB Polska Sp. z.o.o.

(57) **Abstract**

A power coupling for the control of energy flow in an electrical system connected to a low- or medium-voltage grid via a transformer, wherein it is fitted with inputs for RES-type devices, in particular for photovoltaic panels (18), wind turbines (19), domestic waste incinerators (21) or turbines producing electricity from bio-gas (20), and an active filter, a communication module (7), a dynamic compensator, a harmonic compensator configured to simulate a load with a given tgϕ, whereby the coupling is configured to receive variable/constant AC voltage as well as DC voltage and has at least one additional input/output (10) for energy storage (11) including a battery bank, and whereby the energy exchange with the energy storage (11) occurs via AC or DC, the so-called DC-link (10) and galvanic isolation of the coupling from the grid (2,3) does not interrupt the power supply to the installed consumers connected to the outputs (14,15,24,25).

## Description

The invention relates to a power coupling, i.e. a device that controls energy flow.

The power coupling (6) is connected to a source of power supply (2,1) from a low- or medium-voltage grid via a transformer. (3). It is fitted with dedicated inputs (16) for RES-type devices. At present, the dedicated inputs (16) are those for photovoltaic panels (18), wind turbines (19), domestic waste incinerators (21) and turbines producing electricity from bio-gas (20). Depending on the type of electricity-generating device, it is possible to transmit power to the coupling using alternating current as well as direct current (16). Additionally, the coupling is fitted with a dedicated input/output (10) for energy storage (11). Energy is exchanged with the energy storage (11) via AC or DC, the so-called DC-link (10). The energy bank (10) is used to store accumulated energy when energy consumption at the facility (5) falls below production. The energy bank (11) has the additional functionality of supplying large amounts of energy in a short time to the consumers. When starting up an electric locomotive, momentary voltage drops occur, preventing overhead lines from working properly. In some cases, it may be impossible to simultaneously power up two electric locomotives in close proximity. The energy bank (11) solves this problem as it is able to supply a massive amount of energy in a short time. The power coupling (6) is fitted with special controllers to manage the energy production (17) of - for example - photovoltaics in the system, with each panel individually connected to the coupling in order to optimise its operating point so as to produce the highest possible energy at any given time. The intelligent control system (17) also prevents damage to the energy-producing components when the amount of energy needed to power all the devices is less than the energy produced by the panels, when energy cannot be sold, or when the batteries in the bank are full. In such cases, the system will change the operating point of the photovoltaic panels to adjust the amount of energy production to demand or will use the excess energy to increase the central heating/domestic hot water temperatures (24). This measure is intended to extend the service life of the coupling (6) and the energy converters (8,12) so that they do not heat up unnecessarily. The power coupling (6) is fitted with a special module for communication with the powerplant (7) to allow the powerplant to disconnect energy production when there is overproduction in the grid. In such a case, the coupling starts to balance the energy in such a way that no energy flows back into the grid. An additional advantage of the coupling is that it is possible to operate during power failures at the powerplant, in which case the coupling galvanically breaks the connection between the grid and the coupling. During this mode of operation, the consumers are supplied from any type of power generation equipment and/or the energy bank (11). The galvanic disconnection from the grid (2,3) does not shut off power supply to the installed consumers. The central module communicates the energy bank's estimated operating at the current load and based on previously learned scenarios. The integrated active filter (7) in the power coupling (6) makes it possible for the entire system to be perceived from the powerplant side as a load with a constant preset value cos ϕ 1. The use of an active filter in the coupling system results in a high quality of the supply voltage, a reduction in transmission losses in the supply networks, resulting in the elimination of unfavourable phenomena in transformers associated with increased levels of higher harmonic distortion. In addition, if, in the future, the operator requests energy with a preset tangent value ϕ, it is possible to set it up in the process of cogeneration of energy into the grid (2,3). The user can communicate with the coupling through a user interface (26). It is possible to view the operating parameters of the coupling (6): the amount of energy produced, the amount of energy stored, as well as to set the optimum energy distribution. Thanks to the use of a weekly, daily and annual calendar, it is possible to resell energy at different times of the day or week, depending on the energy rate in force, in order to make it most economical for the end user. Additionally, the coupling (6) is fitted with a Wireless Communication Module (22) to enable communication with servers storing data on energy device performance, parameters and the amount of energy produced by the connected RES-devices. The user can access and display this information via a website and mobile app. Home electric car chargers (14) connected to domestic power connections do not have the capacity to charge a car in as little as 15 minutes. With the use of a coupling (6) and an energy bank (11), this will be possible under domestic conditions without changing the energy rates or the rated power of the energy connection. By the end of 2020, car manufacturers promise to launch vehicles with a charging capacity of 400 amperes. The coupling (6) will make it possible to charge cars with such a high current, which is a major improvement for petrol stations, where the ability for frequent car charging will soon become essential. This would be impossible to achieve without intelligent energy storage or a very large power allocation from ES (energy sources). In addition, the power coupling (6) is fitted with a special energy output (23) for supplying heaters in central heating and hot water cookers (24) as well as air recuperation systems in buildings (25).

For facilities with power supply from ES (1,2), the system limits power demand by recharging the energy bank at times of lower consumption, so that it can supply from the energy bank at times of elevated demand.

The facility has a constant energy consumption over a period of 24 hours which helps considerably in the management of energy distribution by the powerplants (PSE - *Polish Power Networks).*

Also, it is possible to control loads that are not strategically important and their duty cycle can be postponed by a few minutes, reducing the 15-minute power.

Also, the power coupling (6) is equipped with a dedicated input (27) for connecting generators, the controller of the coupling has a built-in function of automatic activation of the generator (28). In order to save energy in the event of starting the generator (28), a bypass is activated in the coupling between the generator (27) and the output (12) which supplies the installed electrical consumers (15).

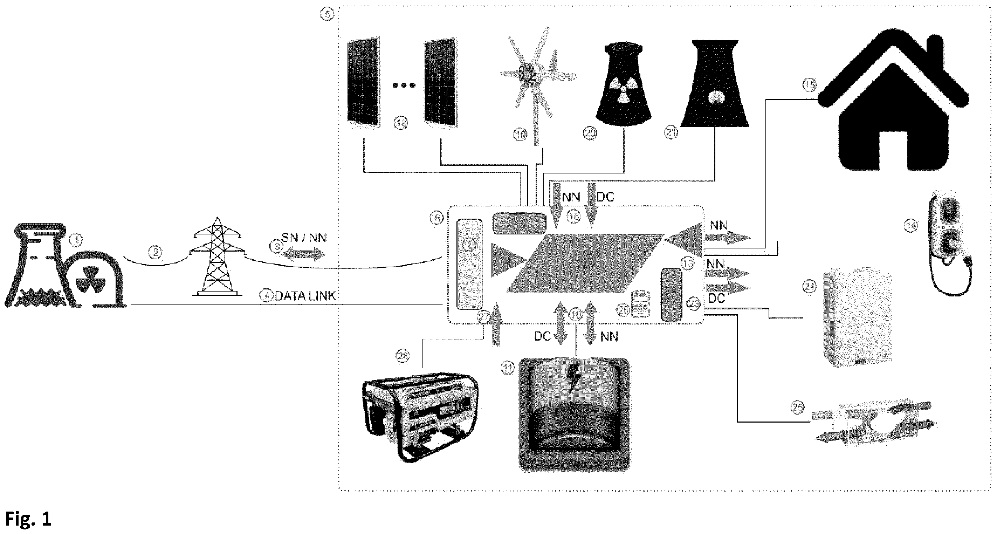

Fig.1 shows a schematic representation of the energy coupling.
1) Powerplant - a producer of electricity that generates energy to be supplied to end users
2) Transmission line - the infrastructure/operator that enables the transmission of energy from the producer to the end user
3) Electricity supplied to the end user: LV low voltage 230 VAC, 400 VAC; MV medium voltage 1kVAC, 3kVAC, 5kVAC, 6kVAC, 10kVAC, 15kVAC, 20kVAC, 30kVAC, 40kVAC, 50kVAC and 60kVAC
4) DATA LINK - incoming information from a power plant (1) or infrastructure (2) prescribing certain end-user behaviour regarding the production and transmission of energy to the grid
5) End user - a set of electricity consumers, a set of electricity-generating components located at a given end-user location; an end user can be either a individual or an institution
6) Smart hybrid power coupling assembly
7) Smart Hybrid Power Coupling Assembly (6) - Dynamic compensator / active filter module providing reactive energy compensation, harmonic compensation and/or enabling the End User (5) to be seen by the power plants (1)/infrastructure (2) as consumers with a set tgϕ
8) AC to DC, DC to AC, AC to AC and DC to DC converter module.
9) A circuit to manage energy flow between the various inputs and outputs
10) Dedicated AC/DC I/O to the energy bank for fast energy transfer
11)Intelligent energy bank 10 kWh - 100 MWh equipped with control features for charging and discharging, temperature and energy consumption in each cell
12)Dedicated output to supply 230VAC / 400VAC equipment.
13)Dedicated AC/DC strong current output for electric car chargers
14)Car charger
15)Set of 230VAC / 400VAC consumers installed at end user (5)
16)Dedicated AC/DC input unit for the connection of power generating equipment
17)Control module for power generation equipment
18)Photovoltaic panel assembly
19)Wind turbine complex
20)Biogas generating units
21)Household waste incinerator unit
22)Communication module equipped with WiFi, Ethernet or BlueTooth
23)Dedicated output for the transfer of electrical energy to heating systems
24)DHW and central heating system for additional heating with electric heaters
25)Air recuperation system for the transfer of electrical energy to heat the air
26)UI module enabling communication between the Coupling (6) and the user
27)Dedicated input for connection of a power generator
28)Power generator

## Claims

1. A power coupling for the control of energy flow in an electrical system connected to a low- or medium-voltage grid via a transformer, **characterised in that** it is fitted with inputs for RES-type devices, in particular for photovoltaic panels (18), wind turbines (19), domestic waste incinerators (21) or turbines producing electricity from bio-gas (20), and an active filter, a communication module (7), a dynamic compensator, a harmonic compensator configured to simulate a load with a given tgϕ, whereby the coupling is configured to receive variable/constant AC voltage as well as DC voltage and has at least one additional input/output (10) for energy storage (11) including a battery bank, and whereby the energy exchange with the energy storage (11) occurs via AC or DC, the so-called DC-link (10) and galvanic isolation of the coupling from the grid (2,3) does not interrupt the power supply to the installed consumers connected to the outputs (14,15,24,25).
